Europäisches Patentamt

European Patent Office

Office européen des brevets

(11) Publication number: **0 336 551**
**A2**

## (12) EUROPEAN PATENT APPLICATION

(21) Application number: **89301901.8**

(22) Date of filing: **27.02.89**

(51) Int. Cl.4: **G03B 27/62**

(30) Priority: **16.06.88 CA 569654**
**29.02.88 CA 560067**

(43) Date of publication of application:
**11.10.89 Bulletin 89/41**

(84) Designated Contracting States:
**CH DE FR GB IT LI NL SE**

(71) Applicant: **Bokman, Wilfred**
**68-255, Metcalf Street**
**Ottawa Ontario K2P 1R4(CA)**

(72) Inventor: **Bokman, Wilfred**
**68-255, Metcalf Street**
**Ottawa Ontario K2P 1R4(CA)**

(74) Representative: **Sherrard-Smith, Hugh et al**
**Appleyard, Lees & Co. 15 Clare Road**
**Halifax, HX1 2HY West Yorkshire(GB)**

(54) Apparatus for improved image formation.

(57) A device for imaging an object to be photographed or projected comprises a sheet of rigid transparent material having a central portion constituting an object surface. This central portion has opposed edge portions that extend into downwardly projecting side portions that have end edges for supporting the device on a support surface, with the object surface lying in a plane displaced from and substantially parallel to the support surface. The object surface is intended for receiving the object to be imaged. The device is preferably uninterruptedly transparent throughout, and includes a base member interconnecting the end edges of the side portions. This base member has an opaque upper surface to provide a background surface that can either be lit by light sources arranged on two sides of the device, or can be black.

## Apparatus for improved image formation

### Background of the invention

This invention relates to apparatus for improved image formation, e.g. the formation of such an image on film or in an electronic camera (referred to generally as photography), or the formation of such an image as a projection on a screen. In its application to photography the invention relates to apparatus for taking photographs of objects under standardized artificial light avoiding shadow problems associated with many such devices. This invention further relates to the standardized, numbrae and penumbrae-free recording of objects, that, by incorporating optimum optical parameters and geometric conditions, strongly compensates for a lack of knowledge, experience and skill on the part of the operator and, as such, can be used to automate the recording process of both 3-dimensional objects as well as flat copy originals, including translucent ones.

Photographs are often used to convey technical information about the appearance of objects, materials or phenomena. This appearance depends not only on the character and shape of the object but largely on the conditions of formation of the optical image and the formation of the photographic record. The photographic method of recording appearance must be made more reproducible from one transient condition stage to another if photographs at various times are to be used for valid comparisons. In the prior art a handful of manufacturers are producing photographic copy stands that are designed to record illustrations such as graphics or similar flat copy originals. Many users encounter problems photographing small 3D objects such as articles, devices or products, because of severe shadow problems. In the object plane these copy stands are employing either an opaque base or involve a straight, horizontal and transparent sheet of plastic. This sheet is usually contained in an opaque frame. The geometric relationship between the recording and the background plane is not taken into consideration to logically accommodate a pyramidal shaped field of view inherent in the framed field of view of a camera, sometimes referred to as the "backview".

Present apparatus is also unsuitable for a multipurpose application such as shadow avoidance and transparency recording. To overcome these prior art shortcomings various optional component parts, such as costly shadow eliminating light boxes are featured that unfortunately produce side effects such as lens glare and glint in vertical parts of the subject, which disguises the true contour and lends an unnatural appearance to objects and causes a lack of image contrast due to lens glare.

Background shadow is a problem in photography. Many devices have been developed in an effort to reduce or neutralize background shadow. However, complete elimination of background shadow has proved difficult. Many devices, in attempting to eliminate background shadow produce flat and unnatural results. Ring light systems produce a pasty and unnatural appearance of the subject due to an excessive amount of surface scatter, diffuse umbrellas cause penumbras and double light source systems produce double shadows.

It therefore appears that there is still a need for a device that avoids shadowing of an object, an image of which is to be photographed or projected onto a screen, and which is easier to use and capable of producing more consistent and repeatable results when performed by an untrained operator, than devices hitherto available.

### Prior Art

U.S. Patent 3,014,302 relates to abstract art devices comprising a plurality of transparent sheets, each for carrying elements of the abstract pattern and each sheet being mountable in superposed relation with each other in a frame.

U.S. Patent 3,967,301 discloses a photographer's copy stand. An object to be photographed is mounted on a pedestal which projects through a plastic screen. Provision is made for back lighting as well as lighting from behind the camera. The object must be one capable of being mounted on such an assembly and parts of the mounting rod are likely to form part of the photograph taken.

U.S. Patent 3,821,764 discloses an illuminating apparatus for portraiture and comprises a set of light reflectors linked with and to a flash unit mounted on a camera. The light from the flash unit is split and redistributed in an effort to provide even, shadowless photographs ensuring that any shadow cast lies behind and in line with the subject when viewed from the camera.

U.S. Patent 3,119,301 relates to a lighting system for photographic cameras which comprises illumination behind a copy board made of light-transmitting material as well as light above the copy board. The purpose of the device is to attempt to reduce shadow effects by counterbalancing any shadows that occur.

U.S. Patent 4,150,893 discloses apparatus for taking photographs, especially for exploded-perspective drawings, which comprises a set of lights in a light box which has a semitransparent surface through which light from the set of lights may emit. It further has parts outside the light box which can shine towards the semitransparent surface, so that objects to be photographed in an exploded-perspective are held on transparent plates spaced from each other and from the semitransparent surface by transparent spacers. Some objects are placed upon the first plate and others on the second plate so that they can all be simultaneously photographed avoiding overlap. Care has be to taken to skillfully avoid shadows and reflections caused by the plate and plate ends, and by the flat surface of the spacers on the first plate onto the parts on the second plate.

Canadian Patent 835,209 discloses a copy board lighting system which has a plurality of layers. Each layer has a reflector arranged to form a slightly diverging beam of light having a central band formed of diverging light and two outer bands of generally parallel light, the outer bands diverging from each other.

Canadian Patents 1,040,455 and 1,050,312 relate to an overhead projector wherein light from a light box passed through an object placed on an object stage and thence through a prism-lens system for projectors.

Canadian Patent 1,123,802 relates to a full-frame flash illumination system for a document copying machine which attempts to ensure that the light that reaches the platen is uniform and diffuse.

Canadian Patent 867,906 discloses apparatus for making close-up photographs with a photo flash camera which ensures that flash light arrives indirectly at the object.

Canadian Patent 796,519 discloses a light box for use beneath a camera for dark field photography of medical and biological specimens.

Canadian Patent 919,637 relates to a copy board illumination system having a set of baffles to ensure that illumination of the copy board compensates for the cosine fall of effect towards the edges of the copy board.

A problem with devices that use counterbalancing illumination disposed below a copy board is that correct illumination to avoid shadows and also to avoid glare is a matter of empirical judgement which can require many repeat photographs each with a slightly different lighting balance, and this further requires judgement by the user as to which photograph is more acceptable.

Light boxes and copy stages of the type often used by photographers are to be found carrying the trade mark Bencher. Included among devices offered is a Bencher M/M system which has a copy stage, mounted in an opaque frame disposed above a copy stage.

C.S. McCamy in Photographic Service and Engineering 10 (4), July-August 1966, pages 185-191 defines a number of terms used in the art of photographing specimens. Included in the terms are, image, lens and object reference planes. In the context of this invention an object plane, and a background plane beyond the object when viewed from a camera or projector lens, are important.

## Summary of the Invention

It is an object of the present invention to provide a device that can be used for taking standardized, easily repeatable photographic or electronic recordings, or for projecting improved images on a screen. The invention also relates to methods that are free from the defects of the prior art and can provide improved photographs or electronic recordings or improved projected images better and cheaper.

To this end the invention consists of a device comprising a sheet of right transparent material having a central portion constituting an object surface, said central portion having opposed edge portions extending into projecting side portions having end edges for supporting the device on a support surface with said object surface lying in a plane displaced from and substantially parallel to said support surface, said object surface being for receiving an object to be imaged.

The device is preferably uninterruptedly transparent throughout to avoid throwing shadows.

The end edges of the side portions can be interconnected by an opaque base member that provides a background surface (light reflective when a bright background is needed or non-light reflective when a dark background is required) lying in a plane substantially parallel to and displaced from the object surface.

The invention also relates to methods of using such a device.

## Brief Description of the Drawings

In the drawings which illustrate embodiments of the invention:

Figure 1 is a schematic front view of an embodiment of the invention;

Figure 2 is a schematic side view of the embodiment of Figure 1;

Figure 3 is a schematic overhead view of the same embodiment as shown in Figures 1 and 2;

Figure 4 is similar to Figure 1 and additionally shows some of the alternative positions of the lights when the apparatus is in use; and

Figure 5 depicts a structural front view of the embodiment of the invention.

Detailed Description of the Embodiment

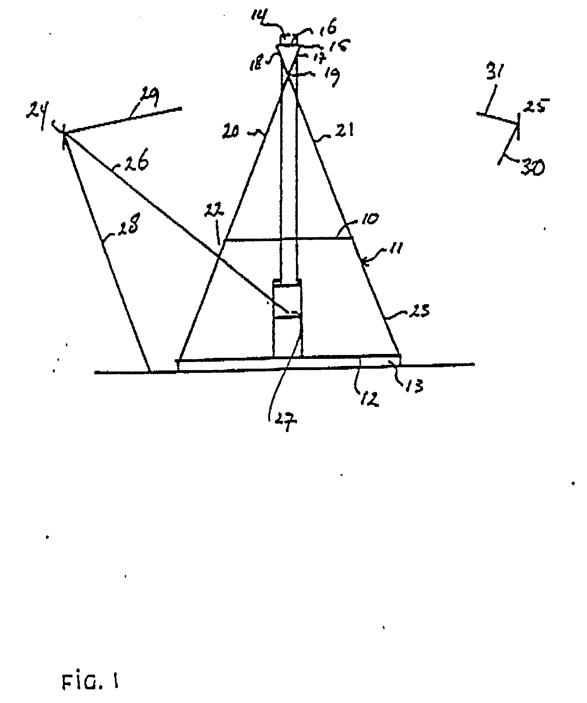

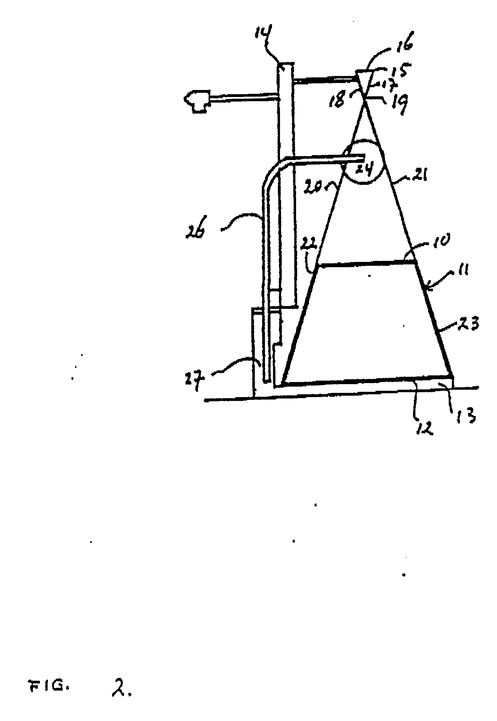

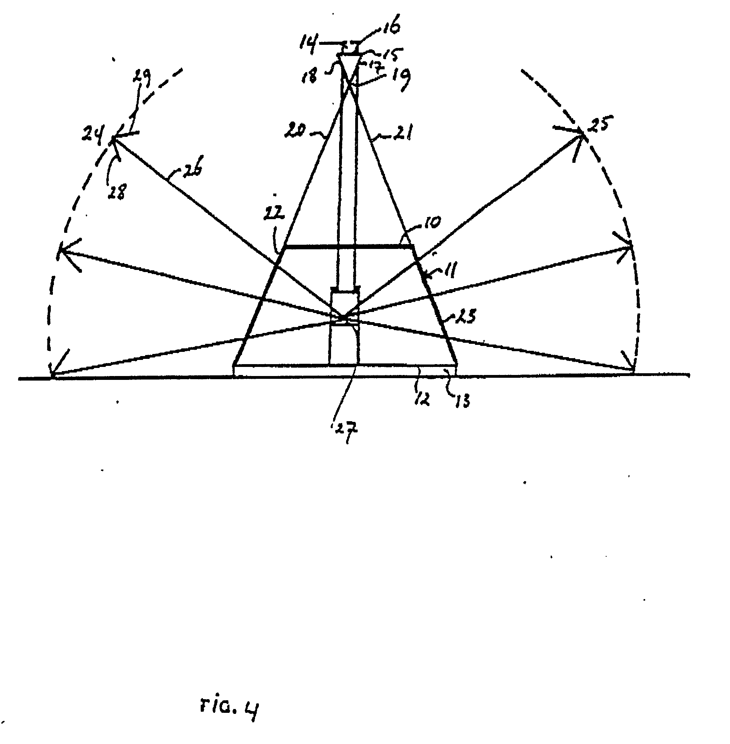

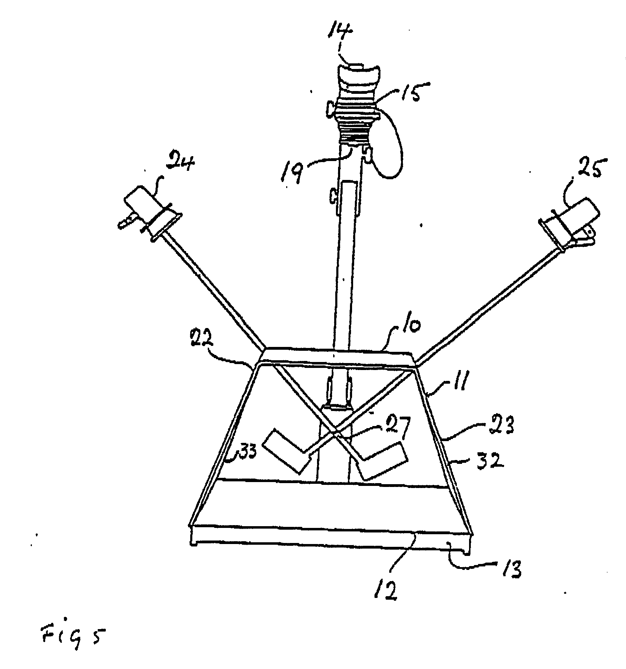

Referring to Figures 1-5, two lights are schematically represented at 24, 25 and one of the lights 24 is shown as being mounted by way of an arm 26 onto a mount 14 (Figure 1 shows one of these lights and arms). The other light 25 is similarly mounted, and both are pivoted at a point 27 which defines the axis of pivotal attachment of each arm to a camera mount 14. These lights 24, 25 are counterweighted around the pivot point 27. Lines 28, 29, 30, 31 define the edges of the beams of light emanating from these lights. In this preferred embodiment of the invention, lines 20, 21 define the frusto-pyramidal field of view of the framed lens of a camera, and coincide with outer faces of downwardly projecting side portions 22, 23 of a member 11 in the form of a sheet of rigid transparent material, e.g. plexiglas, a central portion 10 of which constitutes an object surface. Figure 4 shows alternative positions of the lights.

The edge portions of the object surface 10 of the member 11 are bent to extend into the downwardly projecting side portions 22, 23, the bottom edges of which are interconnected by a base member 13 that has an opaque upper surface 12 that constitutes a background surface. The camera mount 14, with a rack and pinion (not shown), for raising and lowering a camera (details not shown), is linked to the base member 13. The camera will comprise a lens and an image plane 15 at which is found a framed photographic film 16. The preferred geometry, which is shown in Figures 1, 2, 3 and 4, shows converging lines 17 and 18 running from each of the extreme edges of the film, crossing in the lens at the lens plane 19 and diverging as lines 20 and 21. This arrangement is referred to as directing a "framed lens" at an object below.

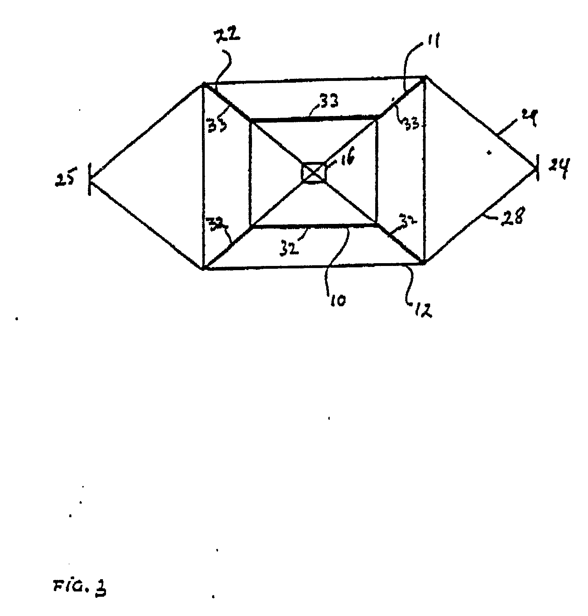

Figure 3, a view from above, shows the preferred configuration and coincidence of centres of the photographic film 16, the object surface 10 and the background surface 12 on a common optical axis. It also shows the object surface as having its edges coinciding with lines drawn from the edges of the photographic film through the lens to the background surface. The heavier lines shown in this figure outline the unitary plexiglas object surface 10 and divergent edges of the side portions 22, 23.

In use, a camera (or projector) can be mounted on the mount 14 in such a position that the lens lies at the lens plane 19 and, in the case of a camera, the film 16 lies in the image plane 15. An object to be photographed (or projected) is placed on the object surface 10, and the lights 24, 25 are set so that shadows cast by such lights cannot be viewed in the framed lens of the camera or projector. In the preferred mode of operation, such shadows are cast outside the background surface. In effect the volume defined by the object surface 10, the side portions 22, 23 and the background surface 12 is transilluminated - i.e. lit from outside. If the object is opaque then the lights are usually kept between the lens plane 19 and the plane of the object surface 10. If the object is light-transmitting, for example a lantern slide, the lights can be disposed between the plane of the object surface 10 and the plane of the background surface 12 so that transmitted rather than reflected light is used in the photograph or projection (see Figure 4). As can be seen, if the lens is moved further from the object surface than shown, a resulting photograph may need to be trimmed, as the lines 20, 21 will lie outside the side portions 22, 23. If the lens is moved towards the object surface then no such trimming should be required.

In other embodiments of the invention, the object or background surfaces can be tinted if required.

While a unitary construction of the central portion 10 and the side portions 22, 23 of the member 11 is preferred for optical reasons, for reasons of transportation and/or storage, it may be preferred to construct the central portion and the side portions as separate pieces that, in use, are interconnected in a manner that affords virtually uninterrupted transparency, e.g. by the use of bevel surfaces, buffing, and interconnection by means of transparent dowels, since it is preferable that the whole basic device, i.e. the central portion constituting the object surface and the side portions constituting supports for the central portion, is uninterruptedly transparent throughout to avoid throwing any shadows onto the background surface. Instead of simply being a central portion supported by two side portions with sloping edges to define a frusto-pyramidal shape, the device can comprise an enclosed frusto-pyramidal structure with four side portions. A series of similar devices of different sizes can be nested and used to take advantage of a depth of field of a lens to obtain exploded view images of parts.

The side portions 22, 23 can project vertically rather than sloping outwardly, if preferred.

The camera may be of the film, electronic, video or digital type, or may, as indicated above, be replaced by the framed lens of a projector.

The outwardly facing edges 32 and 33 of the member 11 are rendered opaque so as to avoid one or more lines being projected onto the background surface 12, and thus cluttering the photograph or image which is produced. The edges 32 and 33 may be rendered opaque by any suitable means such as, for example, by the application of an opaque paint onto the edges.

While the device will normally be used with the object and background surfaces horizontal, it can be used with these surfaces inclined, or even vertical provided appropriate means are provided for securing the object to be imaged to the object surface.

## Claims

1. A device comprising a sheet of rigid transparent material having a central portion constituting an object surface, said central portion having opposed edge portions extending into projecting side portions having end edges for supporting the device on a support surface with said object surface lying in a plane displaced from and substantially parallel to said support surface, said object surface being for receiving an object to be imaged.

2. A device according to claim 1 wherein said device is uninterruptedly transparent throughout.

3. A device according to claim 1 including a base member interconnecting the end edges of the side portions, said base member providing an opaque upper surface constituting a background surface lying in a plane substantially parallel to and displaced from the object surface.

4. A device according to claim 3 wherein said device is uninterruptedly transparent throughout.

5. A device according to claim 3 or 4 wherein said side portions diverge downwardly, the background surface having a larger area than the object surface.

6. A device according to claim 3 or 4 wherein said background surface is light reflective whereby, when illuminated from one or more sides of the device, to provide background light for an object on the object surface viewed from above.

7. A device according to claim 3 or 4 wherein said background surface is non-light reflective whereby to provide a dark background for an object on the object surface viewed from above.

8. A device according to claim 3 or 4, wherein the base member includes means for mounting a camera or projector at an elevated position such that an optical axis extends from the lens of such camera or projector through the object surface to the background surface.

9. A device according to claim 3 or 4, wherein the base member includes means for mounting a pair of light sources directed towards the object surface from respective sides of the device.

10. A device according to claim 3 or 4, wherein the base member includes means for mounting a pair of light sources directed towards the object surface from respective sides of the device, wherein each said light source is movable arcuately about the object surface.

11. A device according to claim 1, 2 or 3, wherein the central portion and the side portions are of unitary construction.

12. A device according to claim 1, 2 or 3, wherein the central portion and the side portions are separately constructed and connected to each other, such connection being uninterruptedly transparent.

13. A device according to claim 1, 2 or 3, wherein the central portion and the side portions together define a frusto-conical shape.

14. A device according to claim 3 or 4, wherein said side portions comprises a pair of flat sheets extending from the object surface, including mounting means for a pair of light sources such that light from said sources shines on said object surface and through said sheets to the background surface.

15. A method of image formation using a device according to claim 1 or 2, said method comprising

(a) mounting said device with the end edges of said side portions on a support surface,

(b) mounting an object to be imaged on said object surface,

(c) directing a framed lens at said object, and

(d) illuminating said object by means of at least one light source directed towards the object from a side of the device, each light source being so positioned that a shadow of the object thrown on said support surface by such source lies outside the field of view of the lens.

16. A method of image formation using a device according to claim 3 or 4, said method comprising

(a) mounting said device with its base member on a support surface,

(b) mounting an object to be imaged on said object surface,

(c) directing a framed lens at said object, and

(d) illuminating said object by means of at least one light source directed towards the object from a side of the device, each light source being so positioned that a shadow of the object thrown at the plane of said base member by such source lies outside the field of view of the lens.

17. A method of image formation using a device according to claim 3 or 4, said method comprising

(a) mounting said device with its base member on a support surface,

(b) mounting an object to be imaged on said object surface,

(c) directing a framed lens at said object, and

(d) illuminating said object by means of at least one light source directed towards the object from a side of the device, each light source being so positioned that a shadow of the object thrown at the plane of said base member by such source lies outwardly of a side edge of the base member whereby not to appear on said background surface.

FIG. 1

FIG. 2.

FIG. 3

FIG. 4

FIG 5